# EUROPÄISCHE PATENTSCHRIFT

(11) **EP 2 861 405 B1**
(45) Veröffentlichungstag und Bekanntmachung des Hinweises auf die Patenterteilung: **09.08.2017**
(21) Anmeldenummer: 13732091.7
(22) Anmeldetag: 16.06.2013
(51) Int. Cl.: B29C 49/42, B29C 31/00, B29C 31/08, B65G 47/24, B65G 47/244, B65G 47/26

(54) **VORRICHTUNG UND VERFAHREN ZUM TRANSPORT VON VORFORMLINGEN**
PREFORM CONVEYING APPARATUS AND METHOD
DISPOSITIF ET PROCÉDÉ DE TRANSPORT DE PRÉFORMES

(30) Priorität: 15.06.2012 DE 102012011761
(43) Veröffentlichungstag der Anmeldung: 22.04.2015
(73) Patentinhaber: KHS Corpoplast GmbH, 22145 Hamburg (DE)
(72) Erfinder: HELLER, Alexander, 22941 Bargteheide (DE); HOLLER, Dieter, 23843 Rümpel (DE)
(74) Vertreter: Hausfeld, Norbert
(86) Internationale Anmeldenummer: PCT/EP2013/001780
(87) Internationale Veröffentlichungsnummer: WO 2013/185932

(56) Entgegenhaltungen:
- EP-A1- 2 072 427
- CH-B1- 698 447
- DE-U1- 20 308 513
- US-A- 4 507 039
- US-A1- 2008 226 763
- US-A1- 2011 108 468

## Beschreibung

Die vorliegende Erfindung betrifft eine Vorrichtung und ein Verfahren zum Transport von Vorformlingen zu einer Maschine zur Herstellung von Behältern aus einem thermoplastischen Material, wobei die Behälterformung durch Blasdruckeinwirkung erzielt wird.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Für die Bereitstellung der Vorformlinge für die Blasmaschine gibt es zwei Alternativen. Bei dem sogenannten Einstufenverfahren werden die Vorformlinge in einem Spritzgussverfahren hergestellt und unmittelbar nach ihrer spritzgusstechnischen Herstellung und einer ausreichenden Verfestigung über eine Transportvorrichtung direkt zur Blasmaschine transportiert. Bei dem sogenannten Zweistufenverfahren werden die Vorformlinge zunächst in einem Spritzgussverfahren gefertigt, anschließend zwischengelagert und erst zu einem späteren Zeitpunkt hinsichtlich ihrer Temperatur konditioniert und zu einem Behälter geblasen. Die Herstellung der Vorformlinge und das Aufblasen der Vorformlinge zu Behältern können zu verschiedenen Zeiten an verschiedenen Orten stattfinden.

Beide Verfahren haben gemein, dass die Vorformlinge über eine Transportvorrichtung der Blasmaschine zugeführt werden. Bekannte Vorrichtungen bestehen z.B. aus einem Steigförderer, über den die in einem Sammelbehälter gelagerten Vorformlinge zu einer Fördereinrichtung transportiert werden. Über die Fördereinrichtung, in der Regel ein Förderband, werden die Vorformlinge zu einer Sortiereinrichtung transportiert. Diese Sortiereinrichtung hat die Aufgabe, die Vorformlinge in eine definierte Position auszurichten, um eine geeignete Übergabe z.B. an eine nachgeschaltete Blasmaschine zu ermöglichen. Bekannte Sortiereinrichtungen (sogenannte Rollensortierer) bestehen z.B. aus zwei Förderrollen, die sich in entgegengesetzter Richtung drehen und zwischen denen ein schmaler Spalt verbleibt, der so gewählt ist, dass die Vorformlinge an ihrem Kragen hängend zwischen den drehenden Förderrollen gehalten werden können. Dabei sind die Förderrollen mit einer Neigung angeordnet, so dass die Vorformlinge in Neigungsrichtung bzw. in einer Förderrichtung an den Förderrollen entlang gleiten. Auf diese Weise werden die Vorformlinge zwischen den rotierenden Rollen hängend sortiert und nachfolgend in der Förderrichtung z.B. zu der Blasmaschine transportiert. In der Regel ist die Fördereinrichtung dergestalt vor der Sortiereinrichtung angeordnet, dass die Vorformlinge am Ende der Fördereinrichtung z.B. von dem Förderband in Schwerkraftrichtung auf die Sortiereinrichtung fallen. Um zu vermeiden, dass die Vorformlinge beim Aufschlagen aus der Sortiereinrichtung wieder herausspringen, ist in der Regel zwischen der Fördereinrichtung und der Sortiereinrichtung eine Zuführeinrichtung vorgesehen. Diese ist so ausgebildet, dass sie den Übergabebereich zwischen der Fördereinrichtung und der Sortiereinrichtung umschließt, so dass die fallenden und springenden Vorformlinge gegen die Seitenwände der Zuführeinrichtung prallen und anschließend wieder in die Sortiereinrichtung zurückfallen. Aufgabe der Zuführeinrichtung ist es, das Einsortieren der Vorformlinge zu erleichtern. Einen solchen Stand der Technik zeigt die CH 698 447 B1, wobei die Sortiereinrichtung in diesem Dokument nicht als Rollensortierer ausgebildet ist. Weitere bekannten Vorrichtungen und Verfahren sind in den Druckschriften US4507039, US2011/108468 und EP2072427 beschrieben. Zudem sind in der Zuführeinrichtung in der Regel Umlenkeinrichtungen vorgesehen, z.B. in der Form von Rutschblechen, durch die die Fallgeschwindigkeit der Vorformlinge verringert und auf diese Weise auch das Springen der Vorformlinge reduziert werden kann.

Bei bekannten Zuführeinrichtungen sind die Umlenkeinrichtungen so angeordnet, dass die fallenden Vorformlinge über die Umlenkeinrichtung zum Teil entgegengesetzt zur Transportrichtung der Vorformlinge in der Sortiereinrichtung (im Folgenden "Förderrichtung"), gerade fallend oder seitlich quer zur Förderrichtung in die Sortiereinrichtung geführt werden. Diese Ausrichtung führt dazu, dass die Geschwindigkeit der Vorformlinge beim Aufprall auf die Sortiereinheit nahezu auf null abfällt. Anschließend werden die Vorformlinge dann über in der Sortiereinheit vorgesehene Förderhilfsmittel weitertransportiert und ausgerichtet. Der Nachteil dieser bekannten Vorrichtung ist, dass der Mengenfluss der Vorformlinge nur bis zu einem bestimmten Durchsatz gesteigert werden kann. Ein darüber hinausgehender Durchsatz, wie er z. B. bei Hochleistungsblasmaschinen erforderlich ist, ist mit den bekannten Vorrichtungen nicht möglich. Im Weiteren kann die Förderleistung von kleineren Anlagen gesteigert werden.

Aufgabe der vorliegenden Erfindung ist daher, ein Verfahren und eine Vorrichtung zum Transport von Vorformlingen z.B. zu einer Blasmaschine bereitzustellen, durch die der von einer Hochleistungsblasmaschine geforderte Durchsatz an Vorformlingen realisiert werden kann.

Gelöst wird die Aufgabe durch eine Vorrichtung zum Transport von Vorformlingen mit den Merkmalen des Anspruchs 1 und durch ein Verfahren mit den Merkmalen des Anspruchs 9.

Die erfindungsgemäße Vorrichtung zum Transport von Vorformlingen zu einer Blasmaschine zur Herstellung von Behältern aus einem thermoplastischen Material weist eine Fördereinrichtung, eine Zuführeinrichtung und eine Sortiereinrichtung auf, wobei die Fördereinrichtung oberhalb der Sortiereinrichtung endet und die Zuführeinrichtung einen Aufnahmebereich aufweist, in den die Vorformlinge von der Fördereinrichtung kommend fallen. Die Zuführeinrichtung weist weiterhin einen Übergabebereich auf, über den die Vorformlinge in die Sortiereinrichtung gelangen. Erfindungsgemäß weist die Zuführvorrichtung weiterhin einen Ausrichtbereich auf, der so ausgebildet ist, dass eine Ausrichtung des Flusses der Vorformlinge in der Zuführeinrichtung in Richtung des Flusses der Vorformlinge in der Sortiereinrichtung erfolgt. Die Vorformlinge sollen so ausgerichtet werden, dass ihrer Bewegungsrichtung bei Übergabe auf die Sortiereinrichtung bereits der Förderrichtung entspricht. In diesem ausgerichteten Zustand werden die Vorformlinge dann der Sortiereinrichtung zugeführt.

Die vorliegende Erfindung bietet den Vorteil, dass durch die frühe Ausrichtung der Vorformlinge in Förderrichtung, nämlich bereits in der Zuführeinrichtung, die Vorformlinge bereits bei Eintritt in die Sortiereinrichtung eine Bewegungsenergie in Richtung des Förderflusses aufweisen, so dass die Vorformlinge beim Übergang in die Sortiereinrichtung durch diese nicht zunächst abgebremst und dann erneut beschleunigt werden müssen, sondern die in der Zuführeinrichtung aufgenommene Bewegungsenergie der Vorformlinge wird vorteilhaft für den Vorformlingsfluss in der Sortiereinrichtung verwendet. Auf diese Weise kann der Durchsatz der Vorformlinge vorteilhaft gesteigert werden, so dass die erfindungsgemäße Vorrichtung insbesondere auch für Hochleistungsblasmaschinen eingesetzt werden kann.

Gemäß einer vorteilhaften Ausgestaltung der Erfindung ist der Aufnahmebereich der Zuführeinrichtung relativ zum Abgabeende der vorgeschalteten Fördereinrichtung dergestalt ausgebildet und angeordnet ist, dass die Vorformlinge von der Fördereinrichtung kommend in Schwerkraftrichtung in den Aufnahmebereich fallen.

Gemäß einer weiteren vorteilhaften Ausgestaltung der Erfindung weist der Ausrichtbereich eine Rutsche auf, deren Rutschrichtung in Richtung des Vorformlingsflusses in der Sortiereinrichtung ausgerichtet ist. Die Verwendung einer Rutsche in dem Ausrichtbereich bietet den Vorteil, dass der Vorformlingsfluss über die Rutsche in einfacher Weise in Richtung des Förderflusses ausgerichtet werden kann. Zudem bietet eine Rutsche den Vorteil, dass durch gezielte Auswahl der Neigung der Rutsche eine gewünschte Geschwindigkeit der Vorformlinge beim Übergang in die Sortiereinrichtung eingestellt werden kann. Dazu ist der Neigungswinkel der Rutsche bevorzugt einstellbar, mit Vorteil automatisiert gesteuert. Die Rutschenneigung könnte z.B. in Abhängigkeit einer eingestellten oder gewünschten Durchflussmenge durch eine Steuereinrichtung automatisiert angepasst und eingestellt werden.

Ebenfalls vorteilhaft ist es, den Ausrichtbereich der Zuführeinrichtung unterhalb des Aufnahmebereichs dergestalt anzuordnen, dass die Vorformlinge von dem Aufnahmebereich kommend direkt oder indirekt auf die Rutsche fallen. So können gemäß einer weiteren vorteilhaften Ausgestaltung der Erfindung in der Zuführeinrichtung und/oder am Anfang der Sortiereinrichtung Umlenkeinrichtungen vorgesehen werden, die den Vorteil bieten, dass die Fallgeschwindigkeit der Vorformlinge vor dem Auftreffen auf die Rutsche reduziert wird, wodurch vorteilhaft das Springen der Vorformlinge nach dem Aufprall auf die Rutsche reduziert werden kann. Zudem kann dadurch erreicht werden, dass alle Vorformlinge die gleiche Rutschstrecke zurücklegen und daher eine relativ einheitliche Geschwindigkeit erhalten.

Gemäß einer weiteren vorteilhaften Ausgestaltung der Erfindung ist die Sortiereinrichtung als Rollensortierer ausgebildet, der aus zwei parallel zueinander angeordneten, sich gegeneinander drehenden Förderrollen besteht. Diese Ausgestaltung bietet den Vorteil, dass sich die Vorformlinge über einen zwischen den Förderrollen vorgesehenen Spalt hängend einsortieren können und durch die Drehbewegung der Förderrollen sowie durch ein in Förderrichtung eingestelltes Gefälle zu einer nachgeordneten Behandlungsmaschine, z.B. zu einer Blasmaschine transportiert werden, ggf. unter Zwischenschaltung weiterer Fördermittel.

Eine weitere vorteilhafte Ausgestaltung der Erfindung sieht einen am unteren Ende des Übergabebereiches, z.B. am Ende der Rutsche, angeordneten Trichter vor, dessen verjüngtes Ende etwa mittig über den Förderrollen der Sortiereinrichtung angeordnet ist. Das Vorsehen eines Trichters bietet den Vorteil, dass die Vorformlinge direkt von dem verjüngten Ende des Trichters auf die Förderrollen gelangen und schnell in die gewünschte hängende Position kommen.

Vorteilhaft sind gemäß einer weiteren Ausgestaltung der Erfindung in der Sortiereinrichtung Führungseinrichtungen vorgesehen, die unmittelbar oberhalb der Förderrollen angeordnet sind, und sich z.B. von dem Trichter bis zu den Förderrollen erstrecken. Es wird als vorteilhaft angesehen, dass sich die Führungseinrichtung eingangsseitg zunächst von einem Eingangsquerschnitt bis zu einer Engstelle mit einem kleineren freien Durchmessers verengt, um sich dann ausgangsseitig dieser Engstelle wieder im freien Durchmesser zu vergrößern. Dabei sollten die Seitenwände in Fallrichtung der Vorformlinge eine kontinuierlich gekrümmte Kontur aufweisen, insbesondere eine stufen- und knickstellenlose Kontur. Der Ausgang der Führungseinrichtung sollte etwa mittig über den Förderrollen der Sortiereinrichtung angeordnet sein. Auf diese Weise ist eine geschlossene Führung des Vorformlingsflusses von der Rutsche über den Trichter in die Sortiereinrichtung realisiert.

Die vorliegende Erfindung betrifft auch ein Verfahren zum Transport von Vorformlingen.

Bei dem erfindungsgemäßen Verfahren werden die Vorformlinge von einer Fördereinrichtung kommend einer Sortiereinrichtung zugeführt und anschließend z.B. zu einer Blaseinrichtung zur Herstellung von Behältern aus einem thermoplastischen Material transportiert. Die Fördereinrichtung endet oberhalb der Sortiereinrichtung, und die Vorformlinge gelangen von der Fördereinrichtung über eine Zuführeinrichtung zu der Sortiereinrichtung. Erfindungsgemäß wird der Fluss der Vorformlinge in der Zuführeinrichtung in Richtung des Flusses der Vorformlinge in der Sortiereinrichtung ausgerichtet und verlässt in diesem ausgerichteten Zustand die Zuführeinrichtung.

Gemäß einer vorteilhaften Ausgestaltung des Verfahrens fallen die Vorformlinge von der Fördereinrichtung kommend in Richtung der Schwerkraft in einen Aufnahmebereich der Zuführeinrichtung.

Weiterhin wird vorgeschlagen, dass die Vorformlinge von dem Aufnahmebereich kommend in einen Ausrichtbereich gelangen, in dem die Vorformlinge in Richtung des Vorformlingsflusses der Sortiereinrichtung ausgerichtet werden, wobei die Vorformlinge z.B. über eine in dem Ausrichtebereich angeordnete Rutsche ausgerichtet werden. Es geht dabei um die Bewegungsausrichtung. Diese Rutsche ist bevorzugt so geneigt, dass die Vorformlinge mit einer gewünschten Geschwindigkeit in die Sortiereinrichtung einlaufen, wobei weiterhin mit Vorteil die Rutschenneigung veränderbar einzustellen ist, insbesondere automatisiert über eine Steuereinrichtung, insbesondere zur Anpassung an eine Änderung der gewünschten Durchflussmenge in der Sortiereinrichtung.

Gemäß einer weiteren vorteilhaften Ausgestaltung der Erfindung werden die Vorformlinge am Ende des Ausrichtbereichs in einem Übergabebereich in die Sortiereinrichtung überführt.

Im Folgenden wird die Erfindung anhand mehrerer in den Figuren gezeigter Ausführungsbeispiele näher erläutert. Es zeigen:
- Fig. 1: eine Vorrichtung zum Transport von Vorformlingen zu einer Blasmaschine für die Herstellung von Behältern aus einem thermoplastischen Material,
- Fig. 2: eine Schnittansicht des Details X aus Fig. 1, wobei es sich um eine Darstellung des Standes der Technik handelt,
- Fig. 3: eine Schnittansicht des Details X aus Fig. 1, wobei ein erstes erfindungsgemäßes Ausführungsbeispiel dargestellt ist, und
- Fig. 4: eine Schnittansicht des Details X aus Fig. 1 in einer Vorderansicht, wobei ein weiteres erfindungsgemäßes Ausführungsbeispiel dargestellt ist.

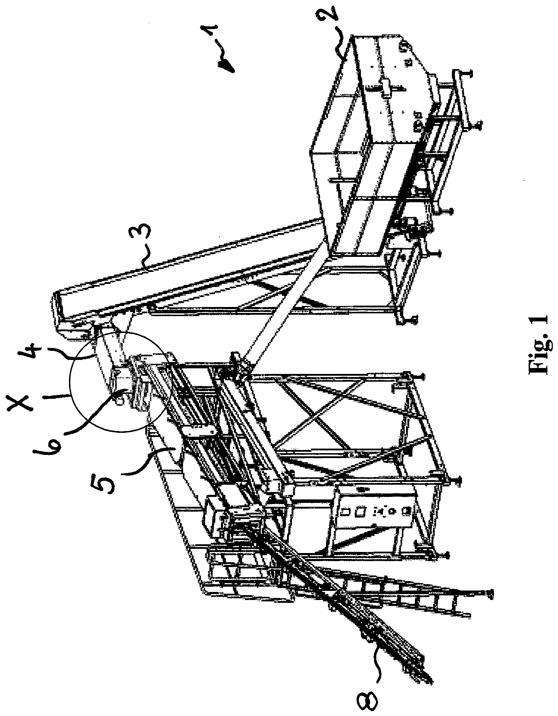

Die Fig. 1 zeigt eine Vorrichtung 1 zum Transport von Vorformlingen z.B. zu einer Blasmaschine für die Herstellung von PET-Flaschen. Die Vorrichtung besteht aus einem Sammelbehälter 2, in dem ein Vorformlingsvorrat bereitgestellt ist. Von dem Sammelbehälter 2 werden die Vorformlinge über einen Steigförderer 3 zu einem Eingabeende einer Fördereinrichtung 4 transportiert. Die Fördereinrichtung 4 ist mit ihrem anderen Ende, dem Abgabeende, oberhalb einer Sortiereinrichtung 5 angeordnet, wobei zur geordneten und möglichst störungsfreien Übergabe der Vorformlinge von der Fördereinrichtung 4 an die Sortiereinrichtung 5 eine dazwischen angeordnete Zuführeinrichtung 6 vorgesehen ist. Von der Sortiereinrichtung 5 gelangen die Vorformlinge sortiert in eine zweite Fördereinrichtung 8, über die die Vorformlinge zu einer Blasmaschine (nicht dargestellt) gefördert werden.

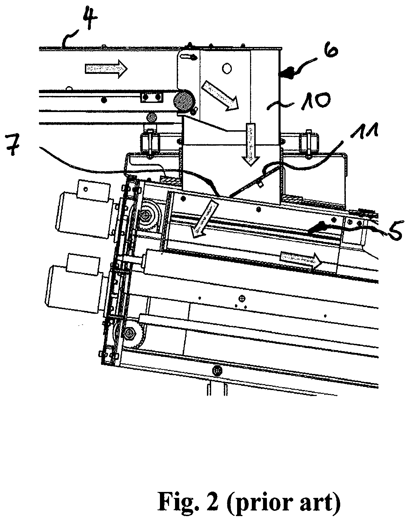

In der Fig. 2 ist im Schnitt eine Seitenansicht des in der Fig. 1 gekennzeichneten Details X dargestellt, wobei die Flussrichtung der Vorformlinge jeweils anhand der eingezeichneten Pfeile dargestellt ist.

Die Vorformlinge fallen, nachdem sie das Abgabeende der Fördereinrichtung 4 erreicht haben, in den Aufnahmebereich 10 der Zuführeinrichtung 6 und werden in ihrem freien Fall von einer Umlenkeinrichtung 11 abgelenkt. Im gezeigten Beispiel ist diese Umlenkeinrichtung 11 eine geneigt angeordnete Prallplatte. Daran anschließend fallen die Vorformlinge über einen Übergabebereich 7 in die Sortiereinrichtung 5.

Wie der Fig. 2 mit Hilfe der Pfeile zu entnehmen ist, wird der Fluss der Vorformlinge durch die Umlenkeinrichtung 11 so umgelenkt, dass die Vorformlinge zum einen in ihrem freien Fall abgebremst werden und somit die Fallgeschwindigkeit reduziert wird. Zum anderen werden die Vorformlinge durch die Umlenkeinrichtung 11 gegen die Förderrichtung geführt, so dass die Geschwindigkeit der Vorformlinge beim Auftreffen in der Sortiereinrichtung zunächst abgebremst wird, wobei die Vorformlinge in der Sortiereinrichtung 5 dann wieder beschleunigt werden müssen.

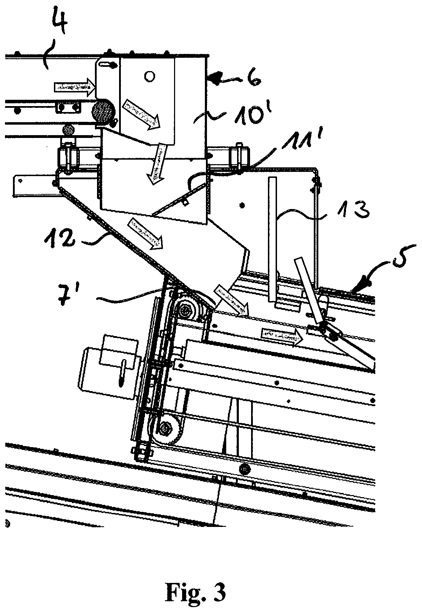

Demgegenüber ist in der Fig. 3 im Schnitt eine Seitenansicht des Details X aus Figur 1 nach einem erfindungsgemäßen Ausführungsbeispiel dargestellt.

In der Fig. 3 ist wiederum die Flussrichtung der Vorformlinge über Pfeile dargestellt. Die Vorformlinge werden über das Abgabeende der Fördereinrichtung 4 in den Aufnahmebereich 10' der Zuführeinrichtung 6 geführt. Jedoch ist bei diesem erfindungsgemäßen Ausführungsbeispiel dem Übergabebereich 7' ein Ausrichtbereich, hier in Form einer Rutsche 12, vorgeschaltet, wobei die Rutsche 12 so angeordnet ist, dass sie oberhalb der Sortiereinrichtung 5 endet. Zusätzlich sind oberhalb der Sortiereinrichtung 5 noch Prallwände 13 vorgesehen, die die Aufgabe haben, "springende" Vorformlinge zurück in die Sortiereinrichtung zu führen und die verhindern, dass Vorformlinge in Förderrichtung springen und sich auf schon einsortierte Vorformlinge legen.

Gemäß der Fig. 3 erfolgt der Fluss der Vorformlinge bei dem erfindungsgemäßen Ausführungsbeispiel von der Fördereinrichtung 4 zu dem Aufnahmebereich 10' und von dort zu der Umlenkeinrichtung 11'. Anschließend fallen die Vorformlinge von der Umlenkeinrichtung 11' auf den oberen Teil der Rutsche 12. Aufgrund der Neigung der Rutsche gleiten die Vorformlinge die Rutsche 12 hinunter und werden dabei beschleunigt. Da die Rutschrichtung der Rutsche 12 zudem in Richtung des Flusses der Vorformlinge in der Sortiereinrichtung 5 (Förderrichtung) ausgerichtet ist, erhalten die Vorformlinge auf der Rutsche 12 die gleiche Flussrichtung wie die Förderrichtung. Dies führt dazu, dass die Vorformlinge beim Auftreffen auf die Sortiereinrichtung 5 eine bestimmte Geschwindigkeit haben, die gleichgerichtet mit der Förderrichtung ist, wodurch ohne zusätzliches Abbremsen oder Beschleunigen ein zügiger Weitertransport der Vorformlinge in der Sortiereinrichtung 5 ermöglicht wird. Die Rutsche kann z.B. in ihrer Neigung eingestellt werden, z.B. um eine gewünschte Geschwindigkeit der Vorformlinge einzustellen. Diese Geschwindigkeit kann z.B. so gewählt werden, dass sie der Fördergeschwindigkeit in der Sortiereinrichtung entspricht. Bevorzugt erfolgt diese Einstellung automatisiert über eine Steuereinrichtung, die z.B. Aktoren steuert, die das untere Rutschenende gegenüber dem oberen Rutschenende höhenverstellt. Die Steuereinrichtung kann dabei so ausgebildet sein, dass bei einer Änderung der Durchflussrate der Sortiereinrichtung auch die Rutschenneigung automatisch mit angepasst wird.

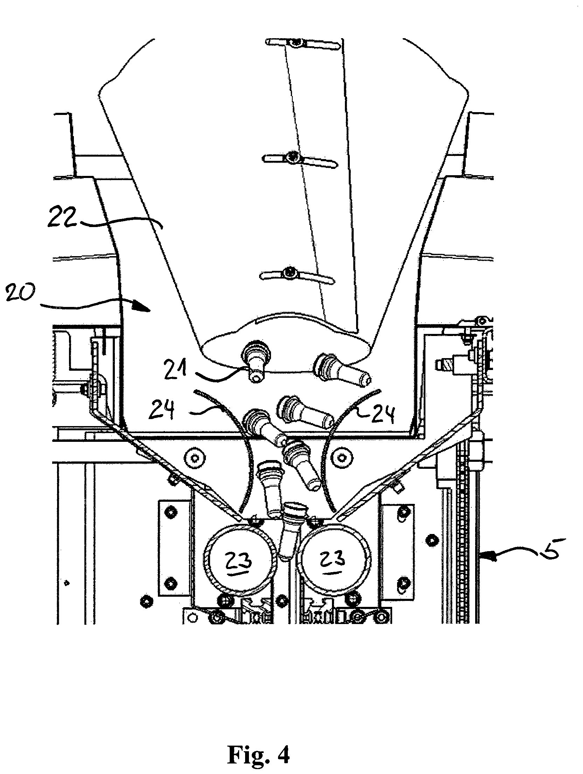

In der Fig. 4 ist in einer Vorderansicht des Details X ein weiteres erfindungsgemäßes Ausführungsbeispiel dargestellt.

Die Fig. 4 zeigt einen Übergabebereich 20 der Zuführeinrichtung 6. Mittels des Übergabebereiches 20 werden die aus dem Ausrichtebereich kommenden Vorformlinge 21 in die Sortiereinrichtung 5 geleitet, wobei der Ausrichtebereich z. B. eine Rutsche 12 aufweisen kann. Zu diesem Zweck weist der Übergabebereich 20 einen Trichter 22 auf, in den die Vorformlinge von der Rutsche 12 kommend fallen oder in den die Rutsche übergeht. Die Ausrichtung der Längsachse des Trichters 12 entspricht vorzugsweise der Neigung der Rutsche 12, damit die Vorformlinge 21 in dem Trichter 12 die in der Rutsche 12 erhaltene Ausrichtung beibehalten.

Die Sortiereinrichtung 5 weist zwei parallel zueinander angeordnete Förderrollen 23 auf, über die eine Ausrichtung und ein Transport der Vorformlinge 21 zu der Blasmaschine erfolgt. Oberhalb der Förderrollen 23 ist weiterhin eine Führungseinrichtung vorgesehen, die aus gebogenen Führungsblechen 24 gebildet ist. Die Führungsbleche 24 sind dergestalt angeordnet, dass die Vorformlinge 21 aus dem Trichter 22 kommend direkt auf die Förderrollen 23 geführt werden. Auf diese Weise wird in dem gemäß Ausführungsbeispiel beschriebenen Übergabebereich 20 die in dem Ausrichtbereich vorgenommene Ausrichtung der Vorformlinge 21 durch den Übergabebereich bis zu der Sortiereinrichtung 5 weitergeführt.

Soweit vorstehend und in den Patentansprüchen von einer Richtungsausrichtung bzw. von einer Geschwindigkeitsausrichtung der Vorformlinge gesprochen wird, so ist darunter stets die Geschwindigkeitskomponente der Vorformlinge in Förderrichtung zu verstehen. Zusätzlich weisen die Vorformlinge stets auch eine Geschwindigkeitskomponente in Fallrichtung auf.

## Patentansprüche

1. Vorrichtung (1) zum Transport von Vorformlingen (21) z.B. zu einer Blasmaschine zur Herstellung von Behältern aus einem thermoplastischen Material, mit einer Fördereinrichtung (4), die Vorformlinge (21) aus einem Vorformlingsvorrat (2) fördert, mit einer Zuführeinrichtung (6), die von der Fördereinrichtung (4) mit Vorformlingen (21) versorgt wird, und mit einer Sortiereinrichtung (5), in der die Vorformlinge (21) sortiert und in einer Förderrichtung mit einer Fördergeschwindigkeit gefördert werden, wobei die Fördereinrichtung (4) oberhalb der Sortiereinrichtung (5) endend angeordnet ist, wobei die Zuführeinrichtung (6) eingangsseitig einen Aufnahmebereich (10, 10') aufweist, in den die Vorformlinge (21) von der Fördereinrichtung (4) kommend gelangen, sowie ausgangsseitig einen Übergabebereich (20) aufweist, über den die Vorformlinge in die Sortiereinrichtung (5) gelangen, **dadurch gekennzeichnet, dass** die Zuführeinrichtung (6) weiterhin einen Ausrichtbereich mit Ausrichtmitteln (12) aufweist, der so ausgebildet ist, dass in dem Ausrichtbereich eine Ausrichtung des Flusses der Vorformlinge (21) in Richtung des Flusses der Vorformlinge (21) in der Sortiereinrichtung (Förderrichtung) erfolgt, und die Vorformlinge (21) so ausgerichtet den Übergabebereich (20) durchlaufen.

2. Vorrichtung nach Anspruch 1, **dadurch gekennzeichnet, dass** der Aufnahmebereich (10, 10') der Zuführeinrichtung (5) dergestalt ausgebildet und angeordnet ist, dass die Vorformlinge (21) von der Fördereinrichtung (4) kommend in Richtung der Schwerkraft in den Aufnahmebereich (10, 10') fallen.

3. Vorrichtung nach Anspruch 1 oder 2, **dadurch gekennzeichnet, dass** der Ausrichtbereich als Ausrichtmittel eine Rutsche (12) aufweist, deren Rutschrichtung in der Förderrichtung der Sortiereinrichtung (5) ausgerichtet ist.

4. Vorrichtung nach Anspruch 3, **dadurch gekennzeichnet, dass** die Neigung der Rutsche (12) so gewählt ist, dass sich die Geschwindigkeit der Vorformlinge (21) im Übergabebereich der Fördergeschwindigkeit der Sortiereinrichtung (5) annähert, ihr insbesondere im Idealfall entspricht.

5. Vorrichtung gemäß einem der vorhergehenden Ansprüche, **dadurch gekennzeichnet, dass** in der Zuführeinrichtung (6) und/oder eingangsseitig der Sortiereinrichtung (5) Umlenkeinrichtungen (11) vorgesehen sind.

6. Vorrichtung nach einem der vorhergehenden Ansprüche, **dadurch gekennzeichnet, dass** die Sortiereinrichtung ein Rollensortierer aus zwei parallel zueinander angeordneten und gegeneinander rotierenden Förderrollen (23) ist, zwischen denen ein Spalt ausgebildet ist.

7. Vorrichtung nach einem der Ansprüche 1 bis 6, **dadurch gekennzeichnet, dass** am unteren Ende des Übergabebereiches (20) der Zuführeinrichtung (6) ein Trichter (22) angeordnet ist, dessen verjüngtes Ende mittig oberhalb der Sortiereinrichtung (5) angeordnet ist.

8. Vorrichtung nach Anspruch 6 und/oder Anspruch 7, **dadurch gekennzeichnet, dass** in der Sortiereinrichtung (5) mindestens eine Führungseinrichtung (24) vorgesehen ist, die sich am unteren Ende des Trichters (22) anschließt.

9. Verfahren zum Transport von Vorformlingen (21) z.B. zu einer Blasmaschine zur Herstellung von Behältern aus einem thermoplastischen Material, wobei die Vorformlinge (21) von einer Fördereinrichtung (4) zu einer Sortiereinrichtung (5) gefördert werden, wobei die Vorformlinge (21) in der Sortiereinrichtung (5) sortiert und in einer Förderrichtung mit einer Fördergeschwindigkeit gefördert werden, wobei die Fördereinrichtung (4) oberhalb der Sortiereinrichtung endend angeordnet ist und die Vorformlinge (21) von der Fördereinrichtung (4) über eine Zuführeinrichtung (6) zu der Sortiereinrichtung (5) geführt werden, **dadurch gekennzeichnet, dass** in der Zuführeinrichtung (6) der Fluss der Vorformlinge (21) in Richtung des Flusses der Vorformlinge (21) in der Sortiereinrichtung (5) (Förderrichtung) ausgerichtet wird.

10. Verfahren zum Transport von Vorformlingen (21) gemäß Anspruch 9, **dadurch gekennzeichnet, dass** die Vorformlinge (21) von der Fördereinrichtung (4) kommend in Richtung der Schwerkraft in einen Aufnahmebereich (10, 10') der Zuführeinrichtung (6) fallen.

11. Verfahren nach Anspruch 10, **dadurch gekennzeichnet, dass** die Vorformlinge (21) von dem Aufnahmebereich (10, 10') kommend in einen Ausrichtebereich (12) gelangen, in dem die Vorformlinge (21) in Förderrichtung ausgerichtet werden.

12. Verfahren nach Anspruch 11, **dadurch gekennzeichnet, dass** die Vorformlinge (21) über eine in dem Ausrichtebereich angeordnete Rutsche (12) ausgerichtet werden.

13. Verfahren nach einem der Ansprüche 11 und 12, **dadurch gekennzeichnet, dass** die Vorformlinge (21) am Ende des Ausrichtebereichs über einen Trichter (22) in die Sortiereinrichtung (5) geführt werden.

14. Verfahren nach einem der Ansprüche 9 bis 13, **dadurch gekennzeichnet, dass** die Vorformlinge im Ausrichtebereich (12) auf die Fördergeschwindigkeit gebracht werden.

15. Verfahren nach Anspruch 14, **dadurch gekennzeichnet, dass** die Geschwindigkeit, auf die die Vorformlinge (21) ihm Ausrichtebereich gebracht werden, einstellbar ist, insbesondere von einer Steuereinrichtung automatisiert einstellbar, insbesondere in Abhängigkeit von einer geänderten Fördergeschwindigkeit.

## Claims

1. An apparatus (1) for transporting preforms (21), e.g. to a blow-moulding machine for production of containers of a thermoplastic material, comprising a conveying device (4), which conveys preforms (21) from a preform supply (2), comprising a feeding device (6), which is supplied with preforms (21) from the conveying device (4), and comprising a sorting device (5), in which the preforms (21) are sorted and are conveyed in a conveying direction at a conveying speed, wherein the conveying device (4) is arranged to end above the sorting device (5), wherein, on the inlet side, the feeding device (6) has a receiving area (10, 10'), into which the preforms (21) coming from the conveying device (4) arrive, and, on the outlet side, a transfer area (20), via which the preforms reach into the sorting device (5), **characterised in that** the feeding device (6) further has an orienting area comprising orienting means (12), which orienting area is configured in such a way that in the orienting area, the flow of the preforms (21) is oriented in the direction of the flow of the preforms (21) in the sorting device (conveying direction), and the preforms (21) pass through the transfer area (20) with this orientation.

2. The apparatus according to claim 1, **characterised in that** the receiving area (10, 10') of the feeding device (5) is configured and arranged in such a way that the preforms (21) coming from the conveying device (4) drop into the receiving area (10, 10') in the direction of gravity.

3. The apparatus according to claim 1 or 2, **characterised in that** the orienting area has a chute (12) as orienting means, the chute direction of which is oriented in the conveying direction of the sorting device (5).

4. The apparatus according to claim 3, **characterised in that** the inclination of the chute (12) is chosen in such a way that the speed of the preforms (21) in the transfer area approaches the conveying speed of the sorting device (5), in particular is equal to it in the ideal case.

5. The apparatus according to any one of the preceding claims, **characterised in that** provision is made in the feeding device (6) and/or on the inlet side of the sorting device (5) for deflecting devices (11).

6. The apparatus according to any one of the preceding claims, **characterised in that** the sorting device is a roller sorter of two conveying rollers (23), which are arranged parallel to one another and rotate against one another and between which a gap is formed.

7. The apparatus according to any one of claims 1 to 6, **characterised in that** a funnel (22), the tapered end of which is arranged in the centre above the sorting device (5), is arranged on the bottom end of the transfer area (20) of the feeding device (6).

8. The apparatus according to claim 6 and/or claim 7. **characterised in that** provision is made in the sorting device (5) for at least one guide device (24), which adjoins the bottom end of the funnel (22).

9. A method for transporting preforms (21), e.g. to a blow-moulding machine for production of containers of a thermoplastic material, wherein the preforms (21) are conveyed from a conveying device (4) to a sorting device (5), wherein the preforms (21) are sorted in the sorting device (5) and are conveyed in a conveying direction at a conveying speed, wherein the conveying device (4) is arranged to end above the sorting device and the preforms (21) are guided from the conveying device (4) to the sorting device (5) via a feeding device (6), **characterised in that** in the feeding device (6), the flow of the preforms (21) is oriented in the direction of the flow of the preforms (21) in the sorting device (5) (conveying direction).

10. The method for transporting preforms (21) according to claim 9, **characterised in that** the preforms (21) coming from the conveying device (4) drop into a receiving area (10, 10') of the feeding device (6) in the direction of gravity.

11. The method according to claim 10, **characterised in that** the preforms (21) coming from the receiving area (10, 10') arrive in an orienting area (12), in which the preforms (21) are oriented in conveying direction.

12. The method according to claim 11, **characterised in that** the preforms (21) are oriented via a chute (12), which is arranged in the orienting area.

13. The method according to any one of claims 11 and 12, **characterised in that**, at the end of the orienting area, the preforms (21) are guided into the sorting device (5) via a funnel (22).

14. The method according to any one of claims 9 to 13, **characterized in that** the preforms are brought to the conveying speed in the orienting area (12).

15. The method according to claim 14, **characterised in that** the speed, to which the preforms (21) are brought in the orienting area, can be adjusted, in particular can be adjusted automatically by a control device, in particular as a function of a changed conveying speed.

## Revendications

1. Dispositif (1) de transport de préformes (21), par ex. vers une machine de moulage par soufflage destinée à fabriquer des récipients en un matériau thermoplastique, avec un convoyeur (4) qui transporte les préformes (21) à partir d'une réserve de préformes (2), un dispositif d'amenée (6) alimenté en préformes (21) par le convoyeur (4), et un dispositif de tri (5) dans lequel les préformes (21) sont triées et transportées selon une direction et une vitesse de transport données, le convoyeur (4) étant agencé de façon à aboutir au-dessus du dispositif de tri (5) et le dispositif d'amenée (6) présentant du côté entrée une zone de réception (10, 10') dans laquelle arrivent les préformes (21) provenant du convoyeur (4) et du côté sortie une zone de transfert (20) par laquelle les préformes passent dans le dispositif de tri (5), **caractérisé en ce que** le dispositif d'amenée (6) présente une zone d'alignement équipée de moyens d'alignement (12) et conçue de façon à ce que, dans cette zone d'alignement, le flux de préformes (21) est aligné selon la direction du flux des préformes (21) dans le dispositif de tri (direction de transport) et que les préformes (21) traversent la zone de transfert (20) ainsi alignées.

2. Vorrichtung nach Anspruch 1, **dadurch gekennzeichnet, dass** la zone de réception (10, 10') du dispositif d'amenée (5) est réalisée et agencée de façon telle que les préformes (21) provenant du convoyeur (4) tombent dans la zone de réception (10, 10') selon la direction de la gravité.

3. Dispositif selon la revendication 1 ou 2, **caractérisé en ce que** la zone d'alignement présente en guise de moyens d'alignement une goulotte (12) dont la direction de glissement est alignée selon la direction de transport du dispositif de tri (5).

4. Dispositif selon la revendication 3, **caractérisé en ce que** l'inclinaison de la goulotte (12) est choisie telle que la vitesse des préformes (21) dans la zone de transfert est proche de la vitesse de transport dans le dispositif de tri (5) et, notamment dans le cas idéal, correspond à cette vitesse.

5. Dispositif selon l'une des revendications précédentes, **caractérisé en ce que** dans le dispositif d'amenée (6) et/ou du côté entrée du dispositif de tri (5) sont prévu des dispositifs déflecteurs (11).

6. Dispositif selon l'une des revendications précédentes, **caractérisé en ce que** le dispositif de tri est un trieur à galets formé par deux galets de transport (23) disposés parallèlement et tournant en sens contraire l'un par rapport à l'autre entre lesquels est formée une fente.

7. Dispositif selon l'une des revendications 1 à 6, **caractérisé en ce que** à l'extrémité inférieure de la zone de transfert (20) du dispositif d'amenée (6) est disposé un entonnoir (22) dont l'extrémité à section décroissante est disposée axialement au-dessus du dispositif de tri (5).

8. Dispositif selon la revendication 6 et/ou 7, **caractérisé en ce que** dans le dispositif de tri (5) est prévu au moins un dispositif de guidage (24) qui joint l'extrémité inférieure de l'entonnoir (22).

9. Procédé de transport de préformes (21), par ex. vers une machine de moulage par soufflage destinée à fabriquer des récipients en un matériau thermoplastique, les préformes (21) étant transportées par un convoyeur (4) vers un dispositif de tri (5) et les préformes (21) étant triées dans le dispositif de tri (5) puis transportées selon une direction de transport et avec une vitesse de transport données, le convoyeur (4) étant agencé de façon à aboutir au-dessus du dispositif de tri et les préformes (21) étant conduites par le convoyeur (4) par un dispositif d'amenée (6) vers le dispositif de tri (5), **caractérisé en ce que,** dans le dispositif d'amenée (6), le flux de préformes (21) est aligné selon la direction du flux des préformes (21) dans le dispositif de tri (5) (direction de transport).

10. Procédé de transport de préformes (21) Selon la revendication 9, **caractérisé en ce que** les préformes (21) provenant du convoyeur (4) tombent dans une zone de réception (10, 10') du dispositif d'amenée (6) selon la direction de la gravité.

11. Procédé selon la revendication 10, **caractérisé en ce que** les préformes (21) provenant de la zone de réception (10, 10') parviennent dans une zone d'alignement (12) dans laquelle les préformes (21) sont alignées selon la direction de transport.

12. Procédé selon la revendication 11, **caractérisé en ce que** les préformes (21) sont alignées par une goulotte (12) agencée dans la zone d'alignement.

13. Procédé selon l'une des revendications 11 à 12, **caractérisé en ce que,** à l'extrémité de la zone d'alignement, les préformes (21) sont conduites par un entonnoir (22) dans le dispositif de tri (5).

14. Procédé selon l'une des revendications 9 à 13, **caractérisé en ce que** les préformes sont amenées à la vitesse de transport dans la zone d'alignement (12).

15. Procédé selon la revendication 14, **caractérisé en ce que** la vitesse à laquelle sont amenées les préformes (21) dans la zone d'alignement est réglable, notamment de façon automatisée par un dispositif de commande, et ce notamment en fonction d'une vitesse de transport modifiée.
